# EUROPEAN PATENT APPLICATION

(11) **EP 4 614 438 A1**
(43) Date of publication of application: **10.09.2025**
(21) Application number: 24162295.0
(22) Date of filing: 08.03.2024
(51) Int. Cl.: G06T 7/30

(54) **METHOD FOR CO-REGISTRATION OF NUCLEAR IMAGES WITH MICROSPCOPIC HISTOPATHOLOGY IMAGES**

(71) Applicant: XEOS Medical NV, 9051 Gent (BE)
(72) Inventor: MARIS, Luna, 9000 Gent (BE); KEEREMAN, Vincent, 9051 Afsnee (BE); VANHOVE, Christian, 1760 Roosdaal (BE)
(74) Representative: IP HILLS NV

(57) **Abstract**

Computer-implemented method for co-registering nuclear images and microscopic histopathology images of an ex-vivo tissue specimen, the method comprising the steps of receiving a 3D functional nuclear image of said lamella of said ex-vivo tissue specimen, wherein the 3D functional nuclear image is configured to visualise a radiotracer distribution included in said lamella, and receiving a 2D microscopic histopathology image of a thin section cut of said lamella after fixation of said lamella.

## Description

### Field of the Invention

The present invention generally relates to a method for co-registering nuclear images with microscopic histopathology images of an ex-vivo tissue specimen.

### Background of the Invention

Functional nuclear imaging modalities visualising radiotracer distributions, such as for example a positron emission tomography (PET) imaging module or a single photon emission computed tomography (SPECT) imaging module, have become widely adopted in oncology. Different types of radiotracers can be used to visualise various tissue characteristics both in cancerous and healthy tissue. In order to correctly interpret these nuclear imaging modalities, a profound understanding of how radiotracers distribute in different types of tissues is needed. To study said radiotracer distribution of existing and new radiotracers in different tissues, nuclear images preferably need to be correlated with corresponding microscopic histopathology images of the tissue after resection. Co-registration of nuclear images and corresponding microscopic histopathology images can further provide valuable insight into a tumour micro-environment and/or underlying causes of heterogeneity in tumour metabolism, which will eventually lead to improved interpretations of nuclear medicine scans and improved accuracy in diagnosis, prognosis and treatment evaluation.

It is known that ex-vivo nuclear imaging can achieve a higher spatial resolution and allows to keep better track of tissue deformation compared to in-vivo tissue imaging. However, performing co-registration of ex-vivo nuclear images and corresponding microscopic histopathology images is not straightforward since ex-vivo tissue can also strongly deform and degrade after resection, in particular between the acquisition of the nuclear images and the obtaining of the microscopic histopathology images, more in particular when handling a soft tissue specimen such as breast tissue. At the same time, time for performing different method steps is limited since radiotracer decay sets in. The radiotracer distribution can also be affected by the use of tissue fixation products, such as formalin, which is preferably avoided.

It is therefore an aim of the present invention to solve or at least alleviate one or more of the above-mentioned problems. In particular, the invention aims at providing a method for co-registering nuclear images with microscopic histopathology images of an ex-vivo tissue specimen which can provide an accurate alignment of said images while remaining relatively easy to execute, thus avoiding tissue processing in addition to standard histopathological processing.

### Summary of the Invention

To this aim, according to a first aspect of the invention, there is provided a computer-implemented method for co-registering nuclear images and microscopic histopathology images of an ex-vivo tissue specimen. An ex-vivo tissue specimen is a tissue specimen which has for example been surgically resected from a living body, preferably a human body, alternatively an animal body. The tissue specimen can for example include tumorous, dysplastic or inflamed tissue. The method comprises the steps as described in the following paragraphs.

The method comprises the step of receiving a three-dimensional (3D) structural image of a lamella of said ex-vivo tissue specimen. The 3D structural image may be received directly from a structural imaging module or indirectly from an image storage device. Immediately after resection of a tissue specimen, the tissue specimen is generally sliced into slices or lamellas. Said lamellas preferably have a thickness of around 2 mm. Other thicknesses can be used as well. The tissue slices preferably have a minimal thickness to allow microtome cutting later and a maximal thickness to allow for proper tissue fixation. A 3D structural image may for example be acquired by a computed tomography (CT) imaging modality or a magnetic resonance (MR) imaging modality and transmitted to a computing facility for analysis. The acquired images of the lamella are preferably images of a 'fresh' lamella, so of a lamella of a tissue specimen which has just been resected and sliced and has not been treated further. A lamella may, however, but need not, be laid on a tissue carrier, such as for example a pathology mousse or a tissue cassette before image acquisition to limit tissue deformation caused by touching and handling the tissue lamellas. Alternatively, the lamella may be frozen shortly.

The method further comprises the step of receiving a 3D nuclear image of said lamella of said ex-vivo tissue specimen. The 3D nuclear image is configured to visualise a radiotracer distribution included in said lamella. In other words, a radiotracer has been administered to the living body and has circulated and been distributed throughout the body before tissue resection. The radiotracer can be any chemical compound in which one or more atoms have been replaced by a radionuclide which may emit gamma rays or positrons as it decays. Again, the acquired images of the lamella are preferably images of a 'fresh' lamella to assure that the radiotracer distribution in the tissue can be visualised without being affected by any fixative solution. The 3D nuclear image may for example be acquired by a PET imaging module or by a SPECT imaging module. The structural image and the nuclear image of the lamella of the ex-vivo tissue specimen are preferably obtained substantially simultaneously or sequentially with the tissue specimen being in the same configuration and/or condition such that it is straightforward to align the structural image and the nuclear image, for example with a simple rigid transformation. In a next step, said 3D structural image and said 3D nuclear image of said lamella of said ex-vivo tissue specimen are aligned.

The method further comprises the step of receiving a 2D microscopic histopathology image of a thin section cut of said lamella after fixation of said lamella, preferably after fixation and embedding of said lamella. As is known to the person skilled in the art, a lamella can be fixated, for example by putting the lamella in a fixative solution, for example a formalin solution. Formalin is a widely used fixative in pathology owing to its convenience in handling, high degree of accuracy and extreme adaptability. Alternative fixative solutions may include ethanol and methanol, or any natural fixative such as jaggery syrup. Lamellas may then be embedded in a supportive embedding medium, such as for example in paraffin wax. Alternative embedding substances may include celloidin, synthetic resins, such as epoxy or acrylic resins, gelatine, or plastics such as methyl methacrylate, glycol methacrylate, or araldite. Alternatively, instead of fixation and embedding, said lamella may be fixated through freezing to a very low temperature. A micro-metre thin section may then be cut from the fixated lamella, preferably from the fixated and embedded lamella, which may be mounted on a glass slide. A 2D microscopic histopathology image, in particular a digital whole slide image (WSI), is taken of the thin section cut of the lamella, for example using a section scanner, and provided to the computing facility.

The method then comprises the step of subdividing the 3D structural image of the lamella into a plurality of 2D structural image slices. The 3D structural image may be considered as a stack of 2D structural slices. A slice thickness may preferably equal a voxel size of the 3D structural image. The subdivision into 2D structural slices is preferably performed in analogy to the histopathological thin section cutting, which is generally performed in parallel to a base surface of the lamella. In other words, the subdivision is preferably performed substantially in parallel to a slicing direction of the lamella. In this way, the next step of co-registration may be simplified, and accuracy of the results may be increased.

The method further comprises the step of performing a co-registration of said 2D microscopic histopathology image of said thin section cut with every structural image slice of said plurality of 2D structural image slices of said 3D structural image. Said co-registration may advantageously be an affine co-registration. Other transformations may be possible as well, such as for example a rigid or a free-form transformation. However, a free-form transformation may be disadvantageous in that it can allow a strong deformation resulting in an impossibility to select a best match, as described in the following paragraph.

Next, the method comprises the step of selecting the structural image slice of said plurality of 2D structural image slices of said 3D structural image which best matches said 2D microscopic histopathology image of said thin section cut. In other words, the aim of this step is to look for the 2D structural image slice that delivers the best match in tissue composition and tissue configuration with the histopathology slice. Depending on the type of specimen, different types of tissues can be distinguished based on the structural image, which may be found in the histopathological image as well, such as for example adipose and non-adipose tissue in a breast CT image. The slice of the structural image to be selected is the slice that has the best match with the histopathological slice in terms of which tissues it is composed of, in what ratios different tissues occur, how these tissues are positioned relative to each other, where they are present and what shape they have. One way to quantify this match may for example be the use of generalised dice coefficients to express the overlap between different types of tissues in the structural image slice and the histopathological image slice. Other metrics to quantify this best match are possible as well.

The method then comprises the step of determining a transformation to align the selected structural image slice and the 2D microscopic histopathology image of said thin section cut. For this transformation, it is preferred to apply a free form transformation to compensate for in plane deformations at least partially caused by the thin sectioning of the lamella. Finally, said at least one determined transformation is applied to a 2D nuclear image slice of the 3D nuclear image corresponding to the selected structural image slice of said lamella of said ex-vivo tissue specimen thus obtaining a transformed 2D nuclear image slice of said lamella. In other words, transformation steps performed on the 3D structural image are now performed on the 3D nuclear image while keeping the transformations as determined on the 3D structural image. More in particular, the same 2D nuclear image slice of the 3D nuclear image is selected as the selected 2D structural image slice. Then, the at least one determined transformation, for example a free-form transformation, is applied to said 2D nuclear image slice of the 3D nuclear image of said lamella corresponding to the selected 2D structural image slice. As a result, the transformed 2D nuclear image slice of said lamella, which is aligned with the 2D structural image slice through the initial alignment of the 3D structural image and the 3D nuclear image, is now aligned with the 2D microscopic histopathology image of said thin section cut. If desired, this method can be repeated for every lamella of said ex-vivo tissue specimen.

The present method can thus provide an accurate alignment of nuclear images with microscopic histopathology images of an ex-vivo tissue specimen without having used the functional nuclear image during the co-registration process. Co-registering the functional nuclear image directly to the microscopic histopathological image could incorrectly deform the nuclear image to match the microscopic histopathological image, introducing an undesirable bias which could prevent one from correctly studying radiotracer distributions in different tissues of the ex-vivo tissue specimen. This bias can be avoided thanks to the present method, via an intermediate and indirect co-registration, thus allowing studying radiotracer distributions in various tissues.

It is further preferred that that method comprises the steps of receiving a 3D structural image of said lamella of said ex-vivo tissue specimen after fixation of said lamella and determining a preliminary transformation between the 3D structural image of the lamella before fixation and the 3D structural image of the fixated lamella. Such steps may compensate for tissue deformation, in particular 3D tissue deformation, caused by fixation of the lamella. The fixation may for example include fixation of the lamella in a fixative, such as for example formalin. As mentioned before, alternative fixative solutions may include ethanol and methanol, or any natural fixative such as jaggery syrup. The 3D structural image before fixation may be preliminarily transformed via for example a free-form deformation model to accurately align the 3D structural image before fixation with the 3D structural image of said lamella after fixation. Further steps of the method, in particular subdividing the 3D structural image of the lamella into a plurality of 2D structural image slices and the co-registration with the microscopic histopathology image, are then preferably performed on said preliminarily transformed 3D structural image rather than on the untransformed 3D structural image of the 'fresh' lamella, i.e. before fixation of the lamella. Moreover, in the final step, the preliminary transformation is then preferably performed as well on the 3D nuclear image of the 'fresh' lamella before selecting the corresponding 2D slice.

Optionally, the method can further comprise the steps of receiving a 3D structural image of said lamella of said ex-vivo tissue specimen after supportive embedding, determining an additional transformation between the 3D structural image of the lamella before or after fixation or the preliminarily transformed 3D structural image and the 3D structural image of the lamella after supportive embedding and aligning the 3D structural image of the lamella before or after fixation or the preliminarily transformed 3D structural image and the 3D structural image of the lamella after supportive embedding based on said additional transformation, thus obtaining a further transformed 3D structural image. As mentioned before, said supportive embedding may for example be performed in paraffin wax. Alternative embedding substances may include celloidin, synthetic resins, such as epoxy or acrylic resins, gelatine, or plastics such as methyl methacrylate, glycol methacrylate, or araldite. The further steps of the method, in particular subdividing the 3D structural image of the lamella into a plurality of 2D structural image slices and the co-registration with the microscopic histopathology image, may then be performed on said further transformed 3D structural image and the additional transformation may also be applied to the nuclear image in the final step. In fact, this step, as well as the further method steps from the subdivision of the 3D structural image into 2D slices, may be applied either on the 3D structural image before fixation, on the 3D preliminarily transformed structural image as described in the preceding paragraph, or on the untransformed 3D structural image of the lamella after fixation, depending on how accurate final image alignment is desired to be.

The aligning or co-registration steps of the method can preferably be based on intensity-based metrics. Intensity-based metrics compare the intensity distributions of two images. Examples of these intensity-based metrics are the sum of squared differences (SSD), the normalized correlation coefficient (NCC), and the mutual information (MI). The SSD and NCC can for example be used when two images of the same modality are aligned, while MI might be more suited when two images of different modalities are matched. Alternatively, other metrics may be used, such as feature- or landmark-based metrics. To align two images, the distance between matching pairs of landmarks defined in both images can be minimized. These pairs of landmarks can be manually defined, for example based on morphological features in the images. This landmark-based method is quite labour-intensive, as well as prone to error and sampling bias. Another option is to use fiducial markers (e.g., laser burns, ink spots, etc.), which are visible in both images that need to be aligned. However, these fiducial markers can lead to tissue damage and information loss.

The 3D structural and/or nuclear image of a lamella of said ex-vivo tissue specimen can preferably be a 3D structural and/or nuclear image of a lamella put on a tissue carrier, in particular in a tissue cassette, or alternatively on a pathology mousse. Such tissue carriers are generally known. A lamella is preferably enclosed in a tissue cassette immediately after surgical resection of the ex-vivo tissue specimen and after the slicing into lamellas. By receiving images of the lamella of the ex-vivo tissue specimen put on a tissue carrier, such as in a tissue cassette or on a pathology mousse, tissue deformation can be minimized and can be tracked relatively easily, thus allowing improved image alignment.

The 3D structural image of the lamella of said ex-vivo tissue specimen and the 3D nuclear image of said lamella of said ex-vivo tissue specimen can preferably be multimodal images. Multimodal images include a structural image and a nuclear image such that the relation between the structural and nuclear image is straightforward to allow easy alignment. The structural and nuclear image can be obtained at the same time, or right after each other with the tissue in the same configuration and/or condition. Said multimodal images can be obtained from clinical scanners, or from dedicated specimen scanners or preclinical scanners with higher spatial resolutions.

More preferably, the 3D structural image and the 3D nuclear image of the lamella of said ex-vivo tissue specimen may have been obtained by a combined PET-CT imaging module. Such a combined PET-CT imaging module can allow capturing both PET images and CT images of an ex-vivo tissue specimen without any specimen manipulation in between the image capturing. Such combined PET-CT imaging modules may even be configured to output aligned 3D structural and nuclear image data. An example of such a combined PET-CT imaging module has been disclosed in WO 2022/157305, which is incorporated herein by reference. Other multimodal imaging modules providing a structural and a nuclear image, may be used as well.

According to a further aspect of the invention, there is provided a controller, a computer program product and a computer readable storage medium comprising computer-executable instructions having the features of claims 8, 9 or 10 respectively. Such a controller, computer program product or a computer readable storage medium can provide one or more of the above-mentioned advantages.

According to a further aspect of the invention, there is provided an image acquisition method for acquiring structural images, nuclear images and microscopic histopathology images of an ex-vivo tissue specimen having the features of claim 11 or 12. Such a method can provide input images for the computer-implemented method as previously described allowing co-registration of nuclear images and microscopic histopathology images of an ex-vivo tissue specimen.

### Brief Description of the Drawings

Fig. 1 shows a preferred embodiment of an image acquisition method for acquiring nuclear, structural and microscopic histopathology images of an ex-vivo tissue specimen according to an aspect of the invention;
Fig. 2 shows a preferred embodiment of a computer-implemented method for co-registering nuclear images and microscopic histopathology images of an ex-vivo tissue specimen; and
Fig. 3 shows a computing system suitable for performing various steps of the method for co-registering nuclear images and microscopic histopathology images of an ex-vivo tissue specimen according to an aspect of the invention.

### Detailed Description of Embodiment(s)

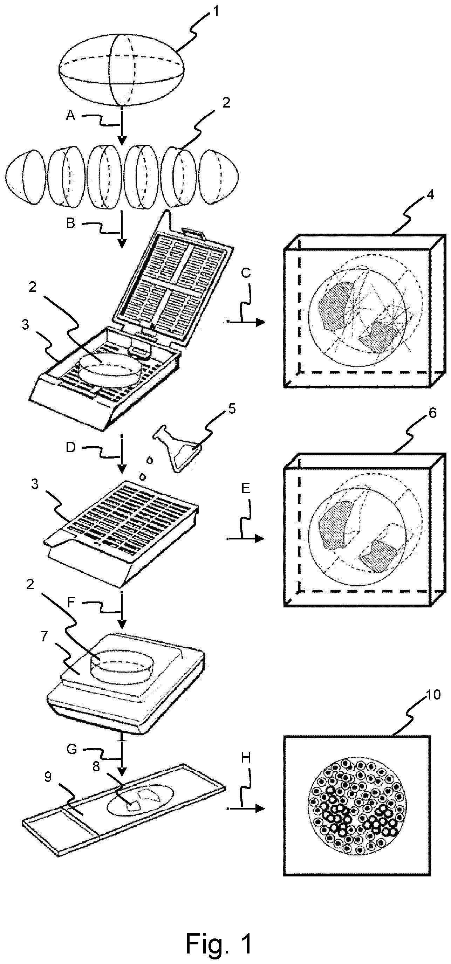

Figure 1 shows a preferred embodiment of an image acquisition method for acquiring nuclear, structural and microscopic histopathology images of an ex-vivo tissue specimen 1 according to an aspect of the invention. The ex-vivo tissue specimen may be tumorous tissue, dysplastic tissue, inflamed tissue or any other type of tissue of interest, for example a breast tissue specimen. The tissue may have been obtained by surgical resection from a body in which a radiotracer has circulated. An example of such a radiotracer is 18F-fluorodeoxyglucose, commonly known as 18F-FDG, a glucose analogue which is taken up into cells that are metabolically active, such as for example tumour cells. 18F-FDG has a half-life time of more or less 110min. Other isotopes which can be used in nuclear imaging include for example 11C having a half-life time of more or less 20 minutes, or 68-Gallium having a half-life time of more or less 68 minutes. These isotopes can be linked to other molecules (which then become radiotracers), such as PSMA. Other molecules, such as nanobodies, can also be linked to PET-isotopes. To optimize nuclear imaging an optimal time window for administration of the radiotracer can be calculated, taking into account the isotope half-life time and an absorption or uptake time of the radiotracer by the body. It is generally recommended to have an interval in a range of more or less 60 to 90 minutes between the administration of the radiotracer and the imaging, although even after more or less 30 minutes, there may already be a relatively strong uptake of the radiotracer in target cells of the tissue. Too early administration of the radiotracer can lead to a relatively important loss of signal and reduced image quality. Administering a higher dose of the radiotracer to compensate for an early administration can increase radiation load.

In a first step A of the image acquisition method, the ex-vivo tissue specimen 1 is sliced into a plurality of slices or lamellas 2. Lamellas generally have a thickness of around 2 mm, but other thicknesses are possible as well, as long as the slices have a minimal thickness allowing microtome cutting and a maximal thickness to allow proper tissue fixation. Slicing the ex-vivo tissue specimen 1 while still being 'fresh' is not considered as being standard practice for every pathology. Large lamellas may be further cut to fit a tissue carrier, for example a tissue cassette 3. In a next step B of the image acquisition method, one lamella of said plurality of lamellas is put on a tissue carrier, for example enclosed in a cassette 3, to limit tissue deformation caused by touching and handling the tissue slices 2. Each of the remaining lamellas may also be put on a respective tissue carrier 3. Then in step C, a multimodal image 4 of said lamella enclosed in the tissue cassette may be acquired, including a 3D structural image and a 3D nuclear image, preferably by a multimodal imaging module, such as a combined PET-CT imaging module. The structural and nuclear image can be obtained at the same time, or right after each other with the tissue in the same configuration and/or condition. The multimodal images can be obtained using clinical scanners, but they can also be obtained using dedicated specimen scanners or preclinical scanners with higher spatial resolutions. It is important that the tissue lamellas are still fresh at the moment of multimodal image acquisition. To assure that the radiotracer distribution in the tissue can be visualized, the time between the moment of intravenous injection of the radiotracer and imaging of the resected tissue should be limited, and the lamellas cannot yet be put into a fixative or other solution, as this may affect the radiotracer distribution in the tissue. However, the tissue may be frozen shortly to make cutting of the lamellas easier. In a further step D the lamella on said tissue carrier 3 is fixated in a fixative 5, for example in formalin. This is commonly done by putting the cassette 3 with the tissue 2 in a buffered formalin solution 5 for at least 12 hours. In step E, a 3D structural image 6 of the fixated lamella 2 in the cassette 3 may preferably be acquired, for example by the same imaging module as for the acquisition of the multimodal image 4. In step F, the fixated lamella 2 may be taken out of the cassette 3 and may be embedded in a supportive embedding medium 7, for example in paraffin wax thus forming a paraffin block including the lamella. In a next step G, a tissue section 8 of said supportively embedded lamella 2, in particular paraffined lamella, is cut and said tissue section 8 is mounted on a glass slide 9. The cutting is advantageously performed substantially in parallel with a ground plane of the cassette 3, thus with a base surface of the lamella 2, so substantially in parallel with the slicing into lamellas of step A. A microtome may for example be used to cut said tissue section 8, preferably having a thickness of around 5 µm. Optionally, the tissue sections may be stained. Different types of stains can be used depending on which tissue characteristics need to be studied. A traditional haematoxylin and eosin colouring can for example be used to distinguish between tumorous and healthy tissue, but many other stains, targeting for example different cell receptors, exist and may be used as well. In the final step H, a whole slide image 10 of said tissue section 8 of said embedded lamella 2 mounted on said glass slide 9 is acquired, for example using a section scanner preferably with micrometre resolution. As a result of the present image acquisition method, nuclear images, structural images and microscopic histopathology images of an ex-vivo tissue specimen can be obtained while hardly interrupting a relatively standard workflow and with minimal deformation of the tissue specimen between the capturing of images allowing a relatively accurate and unbiased co-registration of the nuclear images and the microscopic histopathology images of an ex-vivo tissue specimen.

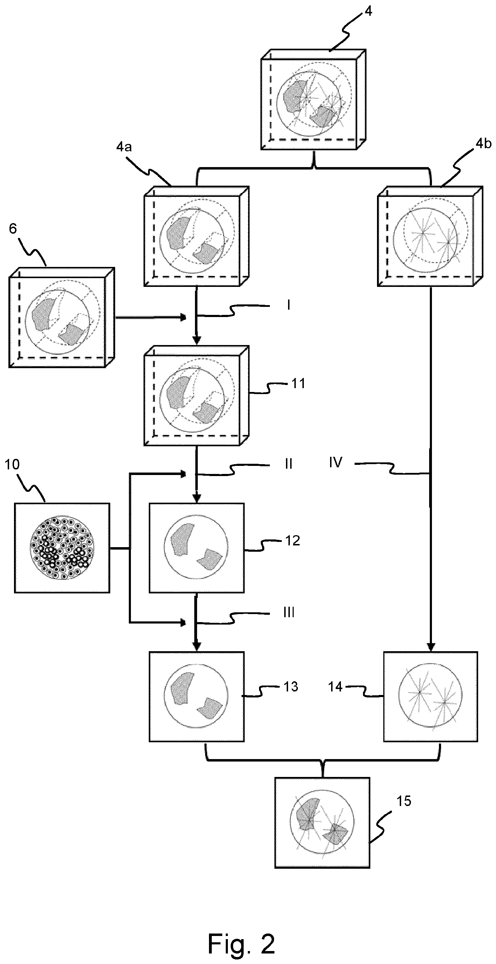

Fig. 2 shows a preferred embodiment of a computer-implemented method for co-registering nuclear images and microscopic histopathology images of an ex-vivo tissue specimen 1. The method comprises the steps of receiving a three-dimensional (3D) structural image 4a of a lamella 2 of said ex-vivo tissue specimen 1 and receiving a 3D functional nuclear image 4b of said lamella 2 of said ex-vivo tissue specimen, the 3D nuclear image being configured to visualise a radiotracer distribution included in said lamella 2. The 3D structural image 4a and the 3D nuclear image 4b may preferably be received as a multimodal image 4, for example as acquired by a combined PET-CT imaging module, including said 3D structural image 4a, and said 3D nuclear image 4b. The method also comprises receiving a 2D microscopic histopathology image 10, also called a whole-slide image (WSI), of a thin section cut 8 of said lamella 2 after fixation, and preferably after embedding, of said lamella. It is further preferred that a 3D structural image 6 of said lamella 2 of said ex-vivo tissue specimen 1 after fixation of said lamella is received. The images 4a, 4b, 6 and 10 may need preprocessing, which may be performed separately from the present co-registration method, before or after reception of the imaging data. PET images may for example be median filtered to remove noise. The nuclear PET images 4b and WSIs 10 may be interpolated to the same isotropic voxel size of for example 100 µm as the structural CT images 4a. The tissue in the CT images and WSIs may be segmented to define binary tissue masks. These tissue masks may be used to remove the background from the CT images and WSIs, and to crop the images. Finally, all images belonging to one lamella may be padded to the same dimensions, and the WSIs may be converted to greyscale images. When receiving said multimodal image 4 it is relatively straightforward to align the 3D structural image 4a and the 3D nuclear image 4b. Before or after the preprocessing, the 3D structural image 4a and the 3D nuclear image 4b can be aligned in a relatively straightforward manner, in particular when said images have been acquired by a multimodal imaging module such as a combined PET-CT imaging module.

In step I, which is an optional step, a preliminary transformation Tₚᵣₑₗ between the 3D structural image of the lamella before fixation 4a and the 3D structural image of the fixated lamella 6 may be determined. Based on said preliminary transformation Tₚᵣₑₗ, the 3D structural image of the lamella before fixation 4a and the 3D structural image of the fixated lamella 6 may be aligned, thus obtaining a preliminarily transformed 3D structural image 11. For this preliminary transformation Tₚᵣₑₗ, a free-form deformation may be used to compensate for tissue deformation caused by fixation. The 3D structural image 4a of the fresh lamella 2 may be considered as the moving image while the 3D structural image of the fixated lamella 6 can be considered as the fixed image in the preliminary transformation Tₚᵣₑₗ.

In step II, which can preferably be performed on the preliminarily transformed 3D structural image 11, or, alternatively, on the 3D structural image 4a of the 'fresh' lamella 2, a slice of the structural image 4a, 11 matching the 2D whole-slide image 10 needs to be selected. Thereto, the 3D structural image of the lamella 4a or 11 is subdivided into a plurality of 2D structural image slices, as if the 3D structural image were a stack of 2D slices parallel to the cassette surface 3, with a slice thickness equal to the voxel size of the structural image 4a or 11. Then a co-registration of said 2D microscopic histopathology image 10 of said thin section cut 8 is performed with every structural image slice of said plurality of 2D structural image slices of said 3D structural image 4a or 11. In particular, for every structural image slice, an affine co-registration T_{A} may be performed with the WSI 10. The structural image slice of said plurality of 2D structural image slices of said 3D structural image 4a or 11 which best matches said 2D microscopic histopathology image 10 of said thin section cut 8 is then selected 12. A free-from deformation is preferably not used in this case, because every structural image slice can then become a good match with the WSI 10 when deformed strongly. To quantify which slice of the structural image best matches the WSI 10, different kinds of metrics can be used. Such metrics can for example express the match of the tissue compositions and shapes in both images.

In step III, a transformation is determined to align the selected structural image slice 12 and the 2D microscopic histopathology image 10 of said thin section cut 8. In other words, the selected slice of the structural biomedical image 12, which is considered as the moving image of the transformation is co-registered with the WSI 10, which is considered as the fixed image, resulting in a transformed 2D structural image slice 13 co-registered with the 2D microscopic histopathology image 10 of said thin section cut 8. A free-form deformation T_{F} may deliver good results to compensate for in-plane deformations caused by sectioning of the paraffin blocks and by the staining procedure.

In step IV, the same transformations as determined for the 3D structural image are applied to the 3D nuclear image 4b. In particular, the preliminary transformation Tₚᵣₑₗ may be applied to the 3D nuclear image 4b if step I was performed on the 3D structural image. Then a 2D nuclear image slice is selected corresponding to the selected structural image slice 12. Finally, the determined transformation T_{F} is applied to the 2D nuclear image slice of the 3D nuclear image 4b corresponding to the selected structural image slice 12 of said lamella of said ex-vivo tissue specimen thus obtaining a transformed 2D nuclear image slice of said lamella 14. Since the initial 3D structural image 4a and the 3D nuclear image 4b of the lamella 2 are aligned and since the 2D structural image slice 13 has been co-registered with the 2D microscopic histopathology image 10 of the thin section cut 8, the transformed 2D nuclear image slice 14 of said lamella is now also aligned with said 2D microscopic histopathology image 10 resulting in a co-registered 2D multimodal image slice 15 of the lamella 2 without the 3D nuclear image having served to determine any transformation in the co-registration process. In this way, no bias caused by a deformation of the nuclear image to match the WSI 10 has been introduced such that a study of the radiotracer distribution in different tissues can be performed in a reliable manner.

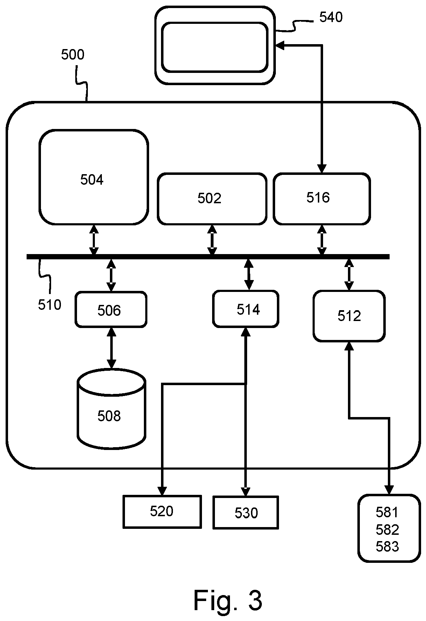

Figure 3 shows a suitable computing system 500 comprising circuitry enabling the performance of steps of embodiments of the method for co-registering nuclear images and microscopic histopathology images of an ex-vivo tissue specimen according to an aspect of the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Computer-implemented method for co-registering nuclear images and microscopic histopathology images of an ex-vivo tissue specimen, the method comprising the steps of:
- receiving a three-dimensional (3D) structural image of a lamella of said ex-vivo tissue specimen;
- receiving a 3D nuclear image of said lamella of said ex-vivo tissue specimen, wherein the 3D nuclear image is configured to visualise a radiotracer distribution included in said lamella;
- aligning said 3D structural image and said 3D nuclear image of said lamella of said ex-vivo tissue specimen;
- receiving a 2D microscopic histopathology image of a thin section cut of said lamella after fixation of said lamella;
- subdividing the 3D structural image of the lamella into a plurality of 2D structural image slices;
- performing a co-registration of said 2D microscopic histopathology image of said thin section cut with every structural image slice of said plurality of 2D structural image slices of said 3D structural image;
- selecting the structural image slice of said plurality of 2D structural image slices of said 3D structural image which best matches said 2D microscopic histopathology image of said thin section cut;
- determining a transformation to align the selected structural image slice and the 2D microscopic histopathology image of said thin section cut;
- applying said at least one determined transformation to a 2D nuclear image slice of the 3D nuclear image corresponding to the selected structural image slice of said lamella of said ex-vivo tissue specimen thus obtaining a transformed 2D nuclear image slice of said lamella.

2. The method according to claim 1, further comprising the steps of
- receiving a 3D structural image of said lamella of said ex-vivo tissue specimen after fixation of said lamella;
- determining a preliminary transformation between the 3D structural image of the lamella before fixation and the 3D structural image of the fixated lamella;
- aligning the 3D structural image of the lamella before fixation and the 3D structural image of the fixated lamella based on said preliminary transformation, thus obtaining a preliminarily transformed 3D structural image.

3. The method according to any of the preceding claims, further comprising the steps of
- receiving a 3D structural image of said lamella of said ex-vivo tissue specimen after supportive embedding;
- determining an additional transformation between the 3D structural image of the lamella before or after fixation and the 3D structural image of the lamella after supportive embedding;
- aligning the 3D structural image of the lamella before or after fixation and the 3D structural image of the lamella after supportive embedding based on said additional transformation, thus obtaining a further transformed 3D structural image.

4. The method according to any of the preceding claims, wherein the aligning steps are based on intensity-based metrics.

5. The method according to any of the preceding claims, wherein the 3D structural image and/or the 3D nuclear image of a lamella of said ex-vivo tissue specimen is a 3D structural image and/or a 3D nuclear image of a lamella put on a tissue carrier, in particular in a cassette.

6. The method according to any of the preceding claims, wherein the 3D structural image of the lamella of said ex-vivo tissue specimen and the nuclear image of said lamella of said ex-vivo tissue specimen are multimodal images.

7. The method according to claim 6, wherein the 3D structural image and the nuclear image of the lamella of said ex-vivo tissue specimen have been obtained by a combined PET-CT imaging module.

8. A controller comprising at least one processor and at least one memory including computer program code, the at least one memory and computer program code configured to, with the at least one processor, cause the controller to perform the method according to any of the preceding claims 1-7.

9. A computer program product comprising computer-executable instructions for performing the method according to any of the preceding claims 1-7 when the program is run on a computer.

10. A computer readable storage medium comprising computer-executable instructions for performing the methods according to any of the preceding claims 1-7 when the program is run on a computer.

11. Image acquisition method for acquiring structural, nuclear and microscopic histopathology images of an ex-vivo tissue specimen, the method comprising the steps of:
- cutting an ex-vivo tissue specimen including a radiotracer into a plurality of lamellas;
- putting one lamella of said plurality of lamellas on a tissue carrier;
- fixating said lamella on said tissue carrier in a fixative;
- embedding said fixated lamella in a supportive embedding medium;
- cutting a tissue section of said supportively embedded lamella;
- mounting said tissue section on a glass slide;
- acquiring a whole slide image of said tissue section of said embedded lamella mounted on said glass slide;
wherein the method further comprises the step of acquiring a 3D nuclear image and a 3D structural image of said lamella after putting said lamella on said tissue carrier and before fixating said lamella in said fixative.

12. Image acquisition method according to claim 11, the method further comprising the step of acquiring a further 3D structural image of said lamella put on said tissue carrier after fixation of said lamella in said fixative and before embedding said lamella in said supportive embedding medium.
